Europäisches Patentamt

European Patent Office

Office européen des brevets

(19)

(11) Numéro de publication: **0 390 714**
**A1**

# (12) DEMANDE DE BREVET EUROPEEN

(21) Numéro de dépôt: **90440028.0**

(22) Date de dépôt: **28.03.90**

(51) Int. Cl.5: **H04N 5/235, G03B 7/28, G02F 1/135, G02C 7/10**

(30) Priorité: **28.03.89 FR 8904333**
**30.11.89 FR 8916149**

(43) Date de publication de la demande:
**03.10.90 Bulletin 90/40**

(84) Etats contractants désignés:
**AT BE CH DE DK ES GB GR IT LI LU NL SE**

(71) Demandeur: **SCANERA S.C.**
**Cap Alpha**
**F-34830 Clapiers(FR)**

(72) Inventeur: **Cornuejols, Georges**
**5 Montée de la Pierre Ronde**
**F-34980 Montferrier(FR)**

(74) Mandataire: **Arbousse-Bastide, Jean-Claude Philippe**
**CABINET ARBOUSSE BASTIDE 20, rue de Copenhague**
**F-67000 Strasbourg(FR)**

(54) **Dispositif de transformation d'une image initiale en une image finale dont les intensités lumineuses ponctuelles sont amplifiées de facon non linéaire.**

(57) Dispositif de transformation d'une image initiale (1) en une image finale (8) dont les intensités lumineuses ponctuelles sont amplifiées de façon non linéaire.

Ce dispositif comporte un composant optique (6) transparent point par point possédant en chaque point une transparence variable en fonction de l'intensité lumineuse atteignant ce point, et un circuit de commande (7) commandant le fonctionnement du composant optique (6) uniformément sur toute sa surface, l'image initiale (1) étant formée sur ou à courte distance de ce composant optique (6) et les rayons (3,5) formant l'image initiale (1) traversant ledit composant optique (6), de telle manière que les intensités lumineuses (2,4) des points de l'image initiale (1) soient amplifiées de façon non linéaire, conduisant à la formation d'une image finale (8) dont les contrastes entre les intensités lumineuses de deux points (9,11) soient différents de ceux entre les deux points correspondants (2,4) de l'image initiale (1).

## DISPOSITIF DE TRANSFORMATION D'UNE IMAGE INITIALE EN UNE IMAGE FINALE DONT LES INTENSITES LUMINEUSES PONCTUELLES SONT AMPLIFIEES DE FACON NON LINEAIRE

La présente invention concerne un dispositif automatique de transformation d'une image initiale en une image finale dont les intensités lumineuses ponctuelles sont amplifiées de manière non linéaire.

En particulier, le dispositif objet de la présente invention réalise une modulation de rayonnements formant une image et permet de contrôler l'intensification et les contrastes d'une image.

Les dispositifs optiques connus à ce jour ont une réponse linéaire en intensité lumineuse. Les capteurs d'images ayant une tolérance limitée aux écarts d'intensités lumineuses ne peuvent donc capter, avec de tels dispositifs optiques, des images de scènes naturelles ou contrastées.

Les projecteurs d'images à écrans plats ne restituent pas des contrastes suffisants.

Les écrans d'affichage possèdent un faible contraste ou sont de réalisation très onéreuse.

Les intensificateurs de lumières fonctionnent de manière monochrome, avec une qualité d'image et un rapport signal/bruit très faibles.

La présente invention propose de remédier à ces inconvénients en proposant un dispositif comportant un composant optique présentant en chaque point une transparence variable en fonction de l'intensité lumineuse atteignant ce point, de telle manière que les contrastes des intensités lumineuses des rayons formant une image finale soient différents de ceux des rayons formant une image initiale.

La présente invention a ainsi pour objet un dispositif de transformation d'image comportant un moyen optique ou électro-optique de formation d'une image initiale, ce dispositif se caractérisant assentiellement en ce qu'il comporte un composant optique présentant en chaque point, par un effet photo-induit, une transparence variable en fonction de l'intensité lumineuse atteignant ce point, un circuit de commande commandant le fonctionnement du composant optique uniformément sur toute sa surface, l'image étant formée sur ou à proximité de ce composant optique et les rayons formant cette image traversant le composant optique, de telle manière que les intensités lumineuses de chaque point formant l'image initiale soient amplifiées de manière non linéaire et forment une image finale dont les contrastes des intensités lumineuses soient différents de ceux des rayons formant l'image initiale.

Le dispositif selon l'invention peut comporter différents moyens de formation d'une image, différents moyens de réalisation de composants optiques, différents arrangements optiques et ainsi que différents circuits de commande du fonctionnement du composant optique.

La description qui va suivre, faite en regard du dessin annexé dans un but explicatif et nullement limitatif, permettra de mieux comprendre les avantages, buts et caractéristiques de la présente invention.

Dans toute cette description, le composant optique sera défini par les termes composant "photo-transparent", étant entendu que ce terme désigne un composant dont la transparence en chaque point est fonction de l'intensité de la lumière incidente sur ce point.

Le contraste entre deux points est par ailleurs défini comme le rapport des intensités lumineuses traversant ces points.

Dans toute la description, le terme "image initiale" est mis au singulier. Cependant, ce terme comprend aussi les images animées.

Les écrans plats présentés dans cette description sont principalement des écrans plats à cristaux liquide, pour des raisons de clarté. Cependant, d'autres composants peuvent être utilisés, comme par exemple les céramiques PLZT, les cristaux liquides ferro-électriques, les écrans magnéto-optiques et plus généralement tous ces composants d'écrans plats.

Dans le dessin annexé :

- la figure 1 représente une vue en coupe schématique du dispositif selon l'invention.

- la figure 1a représente une vue de face d'une image initiale avant transformation par le dispositif selon l'invention.

- la figure 1b représente une vue de face de l'image finaleaprès transformation par le dispositif selon l'invention.

- la figure 2 représente une vue en coupe schématique d'un premier mode de réalisation du dispositif selon l'invention, comportant un objectif.

- la figure 3 représente une vue en coupe schématique d'un deuxième mode de réalisation du dispositif selon l'invention, comportant un écran plat.

- la figure 4 représente une vue en coupe schématique d'un troisième mode de réalisation de l'invention, à objectif et source de lumière interne.

- la figure 5 représente un premier mode de réalisation du composant photo-transparent, à effet photo-conducteur longitudinal.

- la figure 6 représente un deuxième mode de réalisation du composant photo-transparent, à effet photo-diode longitudinal.

- la figure 7 représente un troisième mode de réalisation du composant photo-transparent, à effet photo-conducteur transversal.

- la figure 8 représente un quatrième mode de réalisation du composant photo-transparent, à effet photo-diode transversal.

- la figure 9 représente un cinquième mode de réalisation du composant photo-transparent, à effet photo-conducteur matriciel.

- la figure 10 représente un sixième mode de réalisation du composant photo-transparent, à effet photo-diode matriciel.

- la figure 11 représente un septième mode de réalisation du composant photo-transparent, à effet photo-électro-optique ou photo-chimico-optique.

- les figures 12a, 12b, 12c et 12d représentent quatre circuits électroniques de commande du dispositif selon l'invention.

- la figure 13 représente le troisième mode de réalisation du dispositif selon l'invention représenté en figure 4 associé à un capteur d'image.

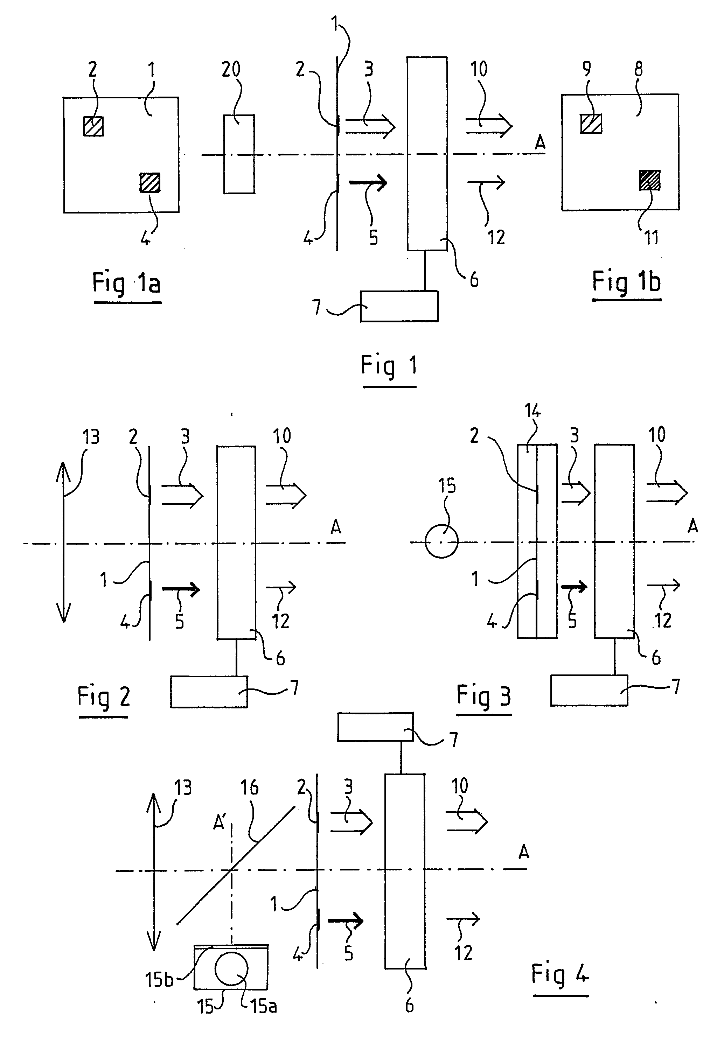

Si l'on se réfère d'abord aux figures 1, 1a et 1b, on voit sur ces figures, sur un axe optique A, un système optique ou électro-optique 20 formant une image initiale 1 composée d'un point de forte intensité lumineuse 2 traversé par des rayons de forte intensité 3 et un point de faible intensité lumineuse 4 traversé par des rayons de faible intensité 5, un composant photo-transparent 6 dont la transparence en chaque point dépend de l'intensité lumineuse le traversant, un circuit de commande 7 percevant une intensité lumineuse moyenne de l'image initiale et commandant optiquement ou électroniquement le fonctionnement du composant photo-transparent 6, et ceci uniformément sur toute la surface du composant 6, et une image finale 8 composée d'un point de forte intensité lumineuse 9 traversé par des rayons de forte intensité 10 et un point de faible intensité lumineuse 11 traversé par des rayons de faible intensité lumineuse 12.

Pour des raisons de clarté, l'image 1 est représentée dans la figure 1 de manière éloignée du composant photo-transparent 6, mais selon l'invention, l'image 1 est a proximité de ou sur la surface du composant photo-transparent 6. De même pour chaque image, initiale 1 ou finale 8, ne sont représentés que deux points et l'épaisseur des rayons lumineux représentés correspond à leur intensité lumineuse, toujours dans un but explicatif.

Les points 2 et 9 sont placés aux mêmes lieux de l'image initiale et de l'image finale ainsi que les points 4 et 11, les formes représentées par les images initiales et finales étant identiques.

Le système 20 est constitué soit d'un objectif, et forme alors une image 1 à partir d'une scène placée dans son champ optique, objectif tel que présenté en regard des figures 2 et 4, soit par d'un écran plat affichant une image, tel que présenté en regard de la figure 3.

Selon que les rayons formant l'image initiale convergent optiquement en avant ou en arrière de la surface du composant photo-transparent 6, l'image initiale est respectivement réelle ou virtuelle. L'image finale est alors respectivement virtuelle ou réelle.

En effet, le composant photo-transparent 6 est afocal. Les directions de propagation des rayons 3 et 10 sont identiques, ainsi que celles des rayons 5 et 12. Par contre les rapports des intensités lumineuses des rayons 10 et 12 sortants du composant 6, sur les intensités lumineuses des rayons 3 et 5 entrant dans le composant 6 sont différents.

L'image finale possède donc un contraste différent de l'image initiale.

La transparence en chaque point du composant photo-transparent 6 dépend directement, d'une part de la commande transmise uniformément sur sa surface, optiquement ou électroniquement, par le circuit de commande 7 et, d'autre part de l'intensité lumineuse ponctuelle le traversant.

En particulier, le composant photo-transparent 6 peut être composé d'un écran plat passif transmissif à polariseurs dans lequel est inséré, entre les électrodes de commande, au moins une couche photo-conductrice ou un assemblage de couches électroniques dopées dont le contact fonctionne de la même manière qu'une photo-diode, de telle manière que le champ électro-magnétique en chaque point de l'écran plat dépend de l'intensité lumineuse incidente des rayons formant l'image initiale.

Le composant photo-transparent 6 peut aussi être constitué d'un écran plat à polariseurs fonctionnant selon un champ électro-magnétique dont l'orientation, transversale ou longitudinale, et l'intensité dépendent de l'intensité des rayons formant l'image initiale, les dits rayons arrivant sur au moins une couche photo-conductrice ou sur un contact à effet de photo-diode disposé entre des électrodes parallèles.

Dans tous les cas, l'effet faisant varier la transparence ponctuelle du composant photo-transparent 6 est photo-induit, c'est à dire commandé par la lumière incidente et non électroniquement.

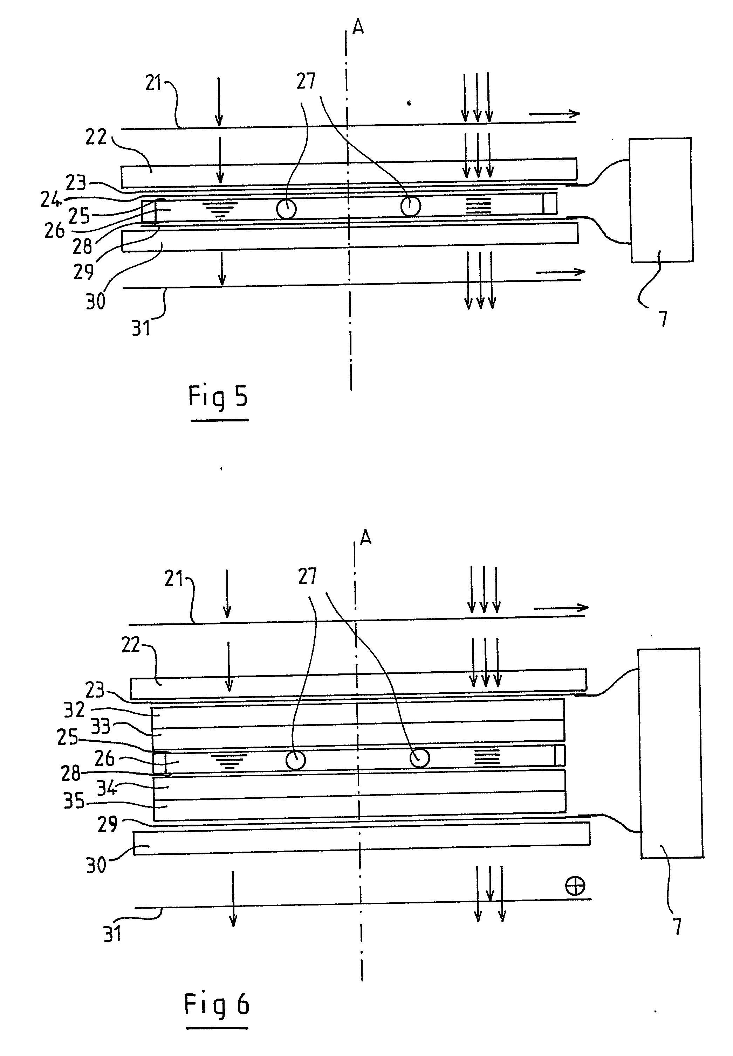

Ces différents modes de réalisation sont présentés en regard des figures 5 à 10.

La position de polariseurs faisant partie du composant photo-transparent 6 détermine alors la croissance ou la décroissance de la courbe de transparence du composant 6 en fonction de l'intensité lumineuse, courbe identique en chaque point de cet écran plat. Des positions de ces polariseurs sont présentés plus loin.

Enfin, le composant photo-transparent 6 peut être composé d'une couche de matériau photo-électro-optique ou photo-chimico-optique, avec ou sans source d'alimentation.

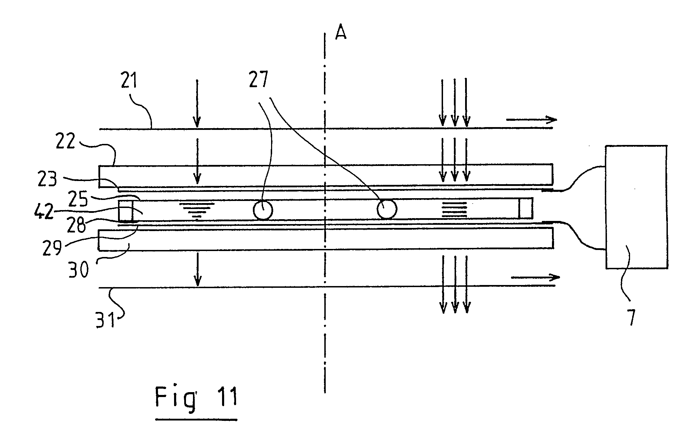

Ces derniers modes de réalisation sont présentés en regard de la figure 11.

Pour effectuer une mesure d'une moyenne des intensités lumineuses des points constituant l'image initiale 1, le circuit 7 peut comporter une cellule photo-sensible, par exemple photo-électrique, percevant l'image initiale 1.

Le circuit 7 peut aussi recevoir un signal émis par un capteur d'image électronique et en extraire une valeur caractéristique.

Le circuit électronique 7 peut utiliser la réponse du composant 6 à ses signaux de commande pour mesurer une transparence moyenne de ce composant 6, ladite transparence étant, comme expliqués plus haut fonction des intensités lumineuses ponctuelles de l'image initiale 1.

Le circuit électronique 7 peut enfin, mais uniquemeent dans le cas où l'image initiale 1 est formée par un écran plat, comme par exemple dans le mode de réalisation du dispositif selon l'invention présenté en figure 3, être connecté à cet écran plat, percevoir ses signaux de commande et en extraire une valeur caractéristique.

Ces différents circuits sont de réalisation aisée et ne sont pas tous décrits ici.

Pour commander la sensibilité et le fonctionnement du composant photo-transparent 6, plusieurs principe peuvent être utilisés.

D'une part, la photo-conductivité ou l'effet de photo-diode dépendent souvent de la température des couches photo-sensibles. Le circuit 7 peut donc être relié à une électrode chauffante transparente, par exemple en ITO, ou oxyde d'étain et d'indium, insérée dans le composant 6. Il est à noter que les électrodes présentées en regard des figures 5 à 11 peuvent aussi être utilisées à cet effet, moyennant, pour chacune d'elles d'être reliées à deux bornes électriques du circuit 7 et moyennant de maintenir sur toute la surface du composant 6, une tension de commande uniforme.

D'autre part, l'émission par un composant électro-optique ou opto-électronique, tel qu'une diode électro-luminescente, d'un rayonnement atteignant toute la surface du composant 6, permet d'activer le fonctionnement de ce composant.

Les signaux de commande du composant 6, signaux généralement alternatifs carrés, peuvent être contrôlés selon leur trois paramètres, tension, intensité et fréquence par le circuit électronique 7.

Enfin, le circuit 7 peut contrôler un diapragme placé dans un objectif formant l'image initiale 1 ou la transparence d'un filtre optique, par exemple à cristaux liquides de telle manière que l'intensité moyenne de l'image 1 entre dans la plage d'intensités lumineuses dans laquelle fonctionne le composant 6.

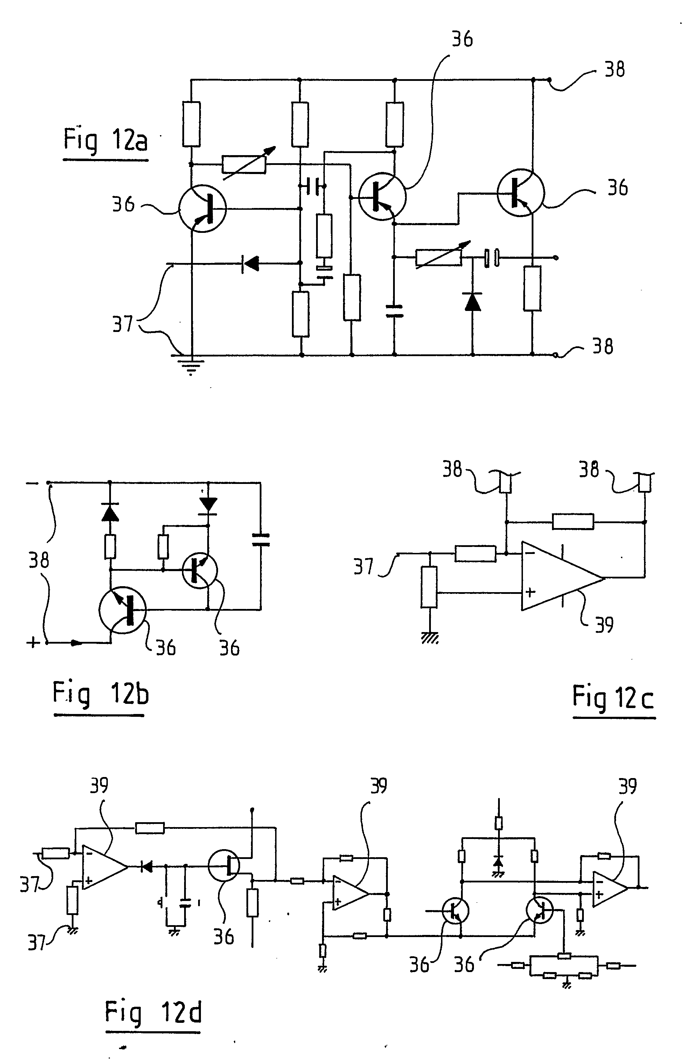

La réalisation de ces différents modes de commande du fonctionement du composant photo-transparent 6 ne présente aucune difficulté et n'est donc présenté dans la figure 12 que brièvement.

Le circuit de commande 7 perçoit une intensité lumineuse caractéristique moyenne ou extrémale de l'image initiale, soit par une cellule de mesure recevant des rayons formant l'image initiale 1, soit par un signal électronique provenant d'un capteur d'image électronique, en particulier dans le cas où le dispositif est combiné à une caméra électronique, soit par une mesure d'un paramètre électrique, de résistance ou de courant à travers le composant 6, soit par un signal de commande électronique d'un écran formant une image, dans le cas où l'image initiale est formée sur un écran.

Il est à noter que la moyenne d'intensité lumineuse perçue par le circuit de commande 7 est une moyenne pondérée.

Le circuit de commande 7 contrôle uniformément sur toute la surface du composant photo-transparent 6 un des paramètres de la photo-transparence, c'est à dire la tension, l'intensité totale, la fréquence, du courant d'alimentation du composant 6, la température du composant 6 ou un rayonnement supplémentaire aux rayons formant l'image initiale 1, le dit rayonnement supplémentaire atteignant ce composant 6. Enfin, le circuit de commande 7 peut commander une valeur de l'intensité lumineuse moyenne de l'image initiale par la commande du système 20 formant l'image initiale 1.

Il est notable que pour des raisons d'efficacité, plusieurs composants photo-transparents 6 peuvent être utilisés dans le dispositif selon l'invention.

Dans la figure 2 on retrouve les éléments de la figure 1, le système optique ou électro-optique 20 étant ici un objectif 13.

L'image finale peut être captée par un capteur d'image électronique, tel que ceux utilisés dans les caméras vidéo ou par un capteur d'image chimique, tel que les pellicules chimiques utilisées dans les appareils photographiques. L'objectif 13 forme dans cette application l'image 1 optiquement derrière le composant photo-transparent 6 et le capteur d'image est positionné dans le plan focal de l'objectif 13, lieu ou se forme l'image finale 8.

L'image finale peut aussi être captée par l'oeil humain, moyennant l'utilisation d'une optique complémentaire de type connu dans les viseur d'appareil photographiques, notamment.

Les applications du dispositif selon ce premier mode de réalisation sont principalement la réduction de contrastes d'images, en particulier pour les images faîtes en extérieur ou avec des sources de lumière dans le champ optique de l'objectif 13.

Dans la figure 3, on retrouve les éléments de la figure 1, le système 20 étant ici un écran plat 14 formant une image 1, à partir d'un signal électronique, et une source de lumière 15. Le circuit de commande 7 est alors relié soit au composant 6 dont il mesure une des caractéristiques électriques, intensité le traversant ou résistance totale, soit au signal électronique commandant l'affichage de l'image 1 sur l'écran plat 14.

Ce mode de réalisation du dispositif objet de la présente invention est particulièrement adapté aux projecteurs d'images et aux écrans d'affichage. Il accentue alors le contraste lumineux de l'image formée sur l'écran plat 14.

Dans la figure 4, on retrouve les éléments de la figure 1, le système optique ou électro-optique 20 étant ici un objectif 13, une source de lumière 15 et un moyen de combinaison 16 des rayons formant l'image initiale et des rayons lumineux provenant de cette source lumineuse 15. Ledit moyen de combinaison 16 est ici une lame partiellement réfléchissante 16 et la source de lumière est constituée d'une ampoule incandescente 15a et d'un dépoli 15b. D'autres sources de lumière et d'autres moyens optiques connus sont conformes à l'esprit de l'invention.

Selon ce troisième mode de réalisation, le signal de commande du fonctionnement du composant photo-transparent 6 et le signal de commande du fonctionnement de la source lumineuse 15 sont temporellement alternés l'un par rapport à l'autre. De cette manière l'effet de photo-transparence photo-induit ne dépend que des rayons lumineux provenant de l'objectif 13, le composant 6 étant au repos pendant les phases d'émission lumineuse de la source 15.

Les rayons lumineux venant de la source lumineuse 15 et traversant le composant photo-transparent 6 sont modulés par les transparences ponctuelles de ce composant 6 et l'image finale est alternativement celle décrite en regard des figures 1 et 2 et celle réalisée de cette manière.

Ce troisième mode de réalisation permet une amplification des intensités lumineuses des rayons formant l'image initiale 1 provenant de l'objectif 13.

Il permet à l'oeil et aux capteurs d'images peu sensibles de percevoir des images de faible luminosité.

Les modes de réalisation du dispositif présentés en regard des figures 2 et 4 peuvent être accolés à un capteur d'images sur la face arrière du composant 6. L'objectif 13 focalise alors l'image 1 sur ce capteur d'image à travers le composant photo-transparent 6. On réalise ainsi des caméras de haute sensibilité et/ou résistantes aux éblouissements.

Dans la figure 5 sont représentés les éléments d'un écran à cristal liquide de type obturateur, c'est à dire possédant deux électrodes et une zone active, et une couche uniforme de photo-conducteur disposée entre une de ces électrodes et le cristal liquide. Ce assemblage constitue un premier mode de réalisation du composant photo-transparent 6.

Dans la figure 5 sont représentés, sur un axe optique A, un polariseur 21, un substrat de verre 22, une électrode uniforme 23, une couche photo-conductrice 24, une couche d'orientation 25, un cristal liquide 26, des espaceurs 27, une couche d'orientation 28, une électrode uniforme 29, un substrat de verre 30 et un polariseur 31.

En dehors de l'axe optique A, un circuit de commande 7 est relié aux électrodes 23 et 29.

Les rayons lumineux sont représentés par des flèches parallèles à l'axe A et les axes de polarisation des polariseurs 21 et 31 sont représentés par des flèches perpendiculaires à cet axe optique A.

Les éléments composant un écran plat sont de type connu et ne sont pas présentés ici.

La couche photo-conductrice 24 possède une épaisseur très faible, de l'ordre du micron et sa conduction électrique en chaque point est variable et décroissante en fonction de l'intensité lumineuse incidente sur ce point.

La différence de potentiel autour d'un point du cristal liquide 26 est donc variable en fonction de l'intensité lumineuse le traversant et atteignant le point correspondant de la couche photo-conductrice 24. Cette différence de potentiel influençant l'effet du cristal liquide, la transparence du composant 6 dépend point par point de l'intensité lumineuse incidente sur ce point.

Cependant, les positions des polariseurs 21 et 31 définissent si la transparence du composant 6 est une fonction croissante ou décroissante de l'intensité lumineuse incidente.

Pour le cas représenté dans la figure 5, le cristal liquide fait, en l'absence de différence de potentiel entre les électrodes 23 et 29, tourner la polarisation de la lumière le traversant d'un quart de tour. Il est, par exemple, de type connu sous le nom de "Twisted Nematic" ou "TN". En présence d'une différence de potentiel suffisante entre les surfaces du cristal liquide, celui-ci perd son activité optique et ne fait plus tourner l'axe de polarisation de la lumière qui le traverse.

Les polariseurs 21 et 31 ayant des axes de polarisation parallèles dans la figure 5, la transparence ponctuelle est ici une fonction croissante de l'intensité lumineuse incidente.

Dans une variante, les polariseurs sont croisés, c'est à dire que leurs axes de polarisation sont perpendiculaires et la transparence ponctuelle est une fonction décroissante de l'intensité lumineuse incidente.

Dans d'autres variantes l'angle de rotation dû à l'effet du cristal liquide est différent de 90 degrés et les positions des polariseurs peuvent déterminer des fonctions alternativement croissante et décroissantes. En particulier, pour le mode de réalisation présenté en figure 4, une fonction croissante puis décroissante est adaptée à intensifier les points de l'image 1 dont l'intensité est trop faible pour être captée par un capteur classique puis décroissante pour réduire les fortes intensités lumineuses.

Le circuit 7 peut ici percevoir une intensité lumineuse moyenne de l'image 1 en mesurant la conduction électrique totale du composant 6 entre les électrodes 23 et 29. Un simple circuit de contrôle automatique de gain permet alors d'afficher une tension entre ces électrodes dépendant automatiquement de cette résistance électrique totale.

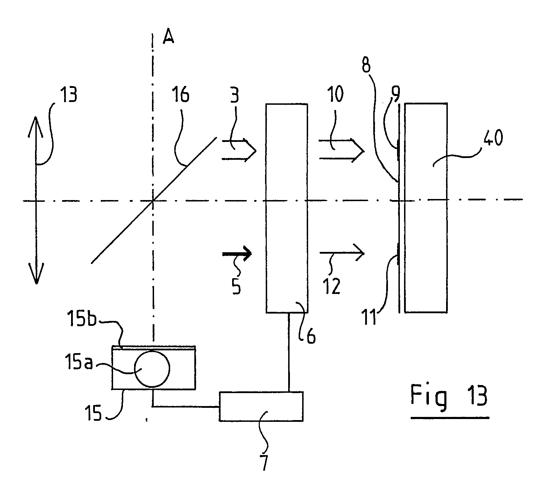

Cependant, d'autres modes de mesure de l'intensité lumineuse moyenne de l'image 1 sont présentés en regard de la figure 13 et sont immédiatement connectables au mode de réalisation du composant 6 présenté dans la figure 5.

Ce premier mode de réalisation du composant photo-transparent 6 a pour principal avantage d'être d'une réalisation facile.

Dans la figure 6, on retrouve les éléments représentés dans la figure 5, à l'exception de la couche photo-conductrice 24. Celle-ci est ici remplacée par deux photo-diodes réalisées en couches parallèles 32, 33, 34 et 35. Les couches 32 et 35 sont dopées, par exemple, en charges électriques positives et les couches 33 et 34 sont dopées de manière électriquement opposée.

Les jonctions entre les couches 33 et 34, d'une part, et 35 et 36, d'autre part, réalisent des photo-diodes qui laissent ponctuellement passer le courant électrique de manière croissante en fonction de l'intensité lumineuse incidente.

Le cristal liquide est donc ici commandé en intensité, sans variation de la différence de potentiel entre les électrodes 23 et 29.

Il est à noter qu'une seule photo-diode peut suffire à réaliser un composant photo-transparent 6 conforme à l'esprit de l'invention.

Pour une plus grande facilité de réalisation, les couches dopées 32, 33, 34 et 35 pourront être morcellées dans leur surface ainsi que les électrodes 23 et 29.

Dans la figure 6, les polariseurs sont représentés avec des axes de polarisation croisés. Si le cristal liquide est de type "twisted nematic" à 90°, la transparence de chaque point du composant 6 est une fonction décroissante de l'intensité lumineuse incidente sur ce point.

Un des avantages de ce mode de réalisation est sa rapidité de réponse.

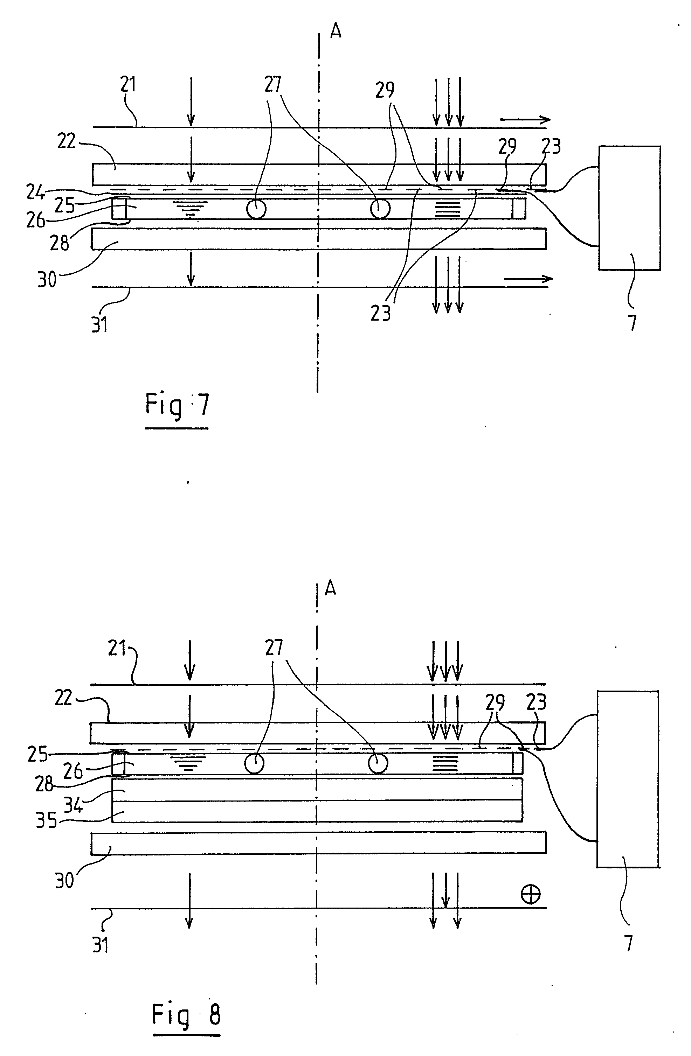

Dans la figure 7, on retrouve les éléments présentés en regard de la figure 5, mais les électrodes 23 et 29 sont disposées alternativement et parallèlement les unes aux autres, du même côté du cristal liquide 26. Les électrodes du composants 6 sont donc reliées alternativement aux bornes du circuit 7. La distance entre les électrodes est préférentiellement supérieure à l'épaisseur du cristal liquide 26. Les électrodes 23 et 29 sont reliées aux bornes du circuit de commande 7.

Selon ce mode de réalisation du composant 6, la conductivité de la couche photo-conductrice entre deux points de deux électrodes parallèles influence l'intensité du champ électrique latéral de la zone du cristal liquide située entre ces deux points. Ce champ électrique détermine l'effet optique du cristal liquide de la même manière que précédament.

En variante, les électrodes 23 et la couche photo-conductrice 24 sont situées de part et d'autre du cristal liquide 26.

Ce mode de réalisation possède des applications pour les images dont l'intensité lumineuse moyenne est élevée.

Dans la figure 8 sont représentés les mêmes éléments que dans la figure 7 mais la couche photo-conductrice 24 est remplacée par deux couches dopées 33 et 34 face aux électrodes 23 et 29. Le fonctionnemnt de ce mode de réalisation est le même que celui présenté en regard de la figure 6, les champs électriques étant ici transversaux et/ou longitudinaux.

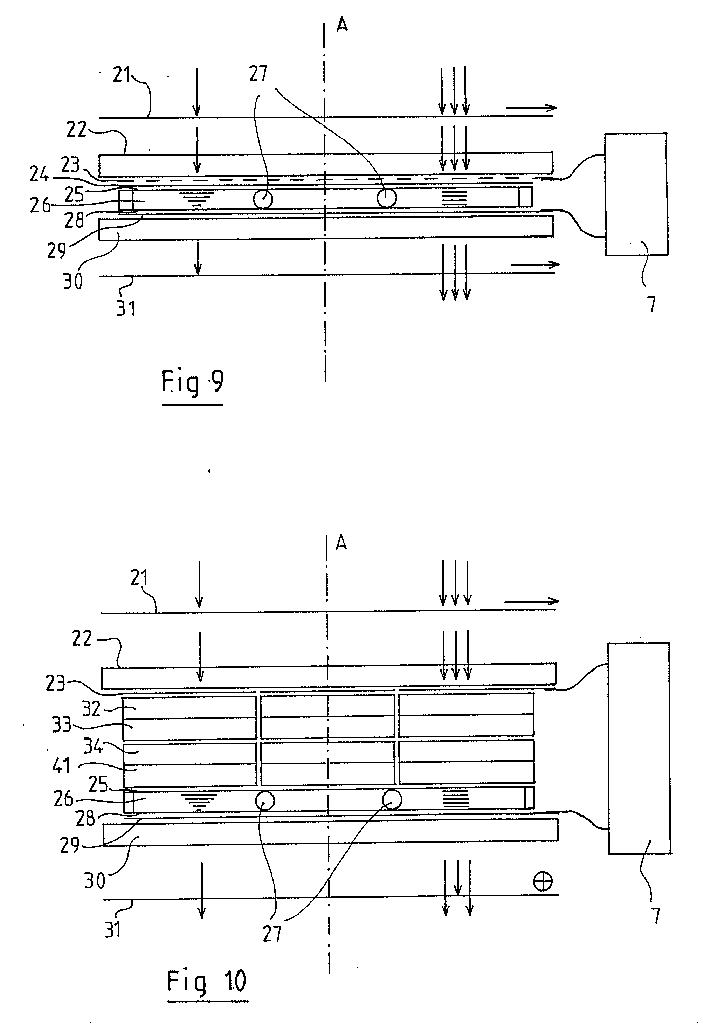

Dans la figure 9, on retrouve les éléments de la figure 5 mais les électrodes 23 et 29 forment des réseaux d'électrodes parallèles, lesdits réseaux étant croisés. Le fonctionnement est identique à celui présenté en regard de la figure 5 mais les tensions appliquées aux zones de cristal liquides placées entre deux électrodes 23 et 29 peuvent être différentes. En particulier, les signaux de commande de ces zones pourront correspondre à l'affichage d'une image positive ou négative de l'image 1 de manière à amplifier l'efficacité de fonctionnement du dispositif selon l'invention.

Dans la figure 10 on retrouve les éléments présentés en regard de la figure 9, mais le circuit photoconducteur est remplacé par un réseau de photo-transistors réalisés en trois couches dopées 32, 33, 34 et entre les électrodes 23 et 29 se trouvent des zones rectangulaires d'électrode 41 servant à réaliser des capacités avec les surfaces des électrodes 29 et chargées par les photo-transistors.

D'autres modes de réalisation à photo-transistors ou à diodes fonctionnant matriciellement peuvent aussi être réalisés en transformant les transistors ou les diodes des écrans à cristaux liquides à matrice active en photo-transistors ou photo-diodes.

Dans la figure 11 sont représentés les mêmes éléments que dans la figure 5, à l'exception de la couche photo-conductrice 24 et du cristal liquide 26.

Le cristal liquide est ici remplacé par une couche uniforme 42 qui possède un effet photo-électro-optique, c'est à dire dont les caractéristiques optiques ponctuelles de transparence dépendent directement de l'intensité de la lumière incidente ponctuellement par deux effets successifs, l'un photo-électrique, l'autre électro-optique. Une telle couche peut être réalisée par mélange ou combinaison chimique d'un cristal liquide et d'un semi-conducteur.

Selon une variante, des composés chimiques présentant naturellement un effet de non linéarité de transmission de la lumière peuvent servir de composant fondamental du composant photo-transparent 6.

Dans une variante, le composant photo-transparent 6 est constitué d'un composé chimique placé entre deux lames de verre et utilisant le principe des ondes chimiques pour réaliser des transparences croissantes ou décroissantes en fonction des intensités lumineuses incidentes. Les premier composés chimiques connus présentant ces effets sont: une solution acide d'un bromate en présence d'un catalyseur, un complexe de ruthénium, cette solution se trouvant en couche mince, de l'ordre du millimètre. Placé entre des filtres colorés, sa transparence est variable.

Pour les différents modes de réalisation du composant 6 présentés en regard des figures 5 à 11, il peut être utile de combiner plusieurs composants photo-transparents 6 dans le dispositif selon l'invention.

Ces composants pourront alors avoir des sensibilités différentes.

Pour les composants 6 comportant un cristal liquide, il sera préférentiel d'associer des cristaux liquides dont les effets rotatoires sur la lumière polarisée se font selon des sens de rotation opposés.

De même un fonctionnement en couleur du dispositif peut s'obtenir en ajoutant des filtres colorés en triade dans les composants 6 ou en utilisant trois composants 6 placés successivement sur l'axe optique A et fonctionnant chacun selon une couleur fondamentale.

Pour la combinaison de plusieurs composants photo-transparents 6 à polariseurs, tels que ceux présentés aux figures 5 à 11, certaines positions de polariseurs permettent des fonctionnement particuliers.

Ainsi, l'utilisation d'un cristal liquide ayant un pouvoir rotatoire d'un demi-tour, soit 180 degrés, le positionnemeent de deux polariseurs ayant des axes de polarisation perpendiculaires permet de réaliser une transparence ponctuelle du composant 6 fonction croissante puis décroissante de l'intensité lumineuse incidente. Pour le mode de réalisation présenté en regard de la figure 4, cette fonction permet d'amplifier les faibles intensités lumineuses et de diminuer le contrastes des points de forte intensité lumineuse.

La combinaison de deux composants 6 ayant chacun un pouvoir rotatoire de 90 degrés, soit un quard de tour, mais ayant des sensibilités différentes, c'est à dire réagissant à des valeurs d'intensités lumineuses ponctuelles différentes, peut se faire sans polariseur intermédiaire et avec des polariseurs ayant des axes de polarisation perpendiculaires. Cette combinaison réalise la même fonction que celle présentée au paragraphe précédant mais avec une plus grande efficacité.

Deux composants photo-transparents 6 à pouvoirs rotatoires complémentaires, c'est à dire dont le total fait 90 degrés, et dont les sensibilités sont différentes, avec ou sans polariseur intermédiaire permet de réaliser des fonctions dont la pente est faible.

Un cristal liquide "Twisted Nematic" ayant un pouvoir rotatoire de 90 degré placé optiquement derrière un polariseur permet de commander électriquement l'axe de polarisation de la lumière en sortant.

L'insertion d'un tel cristal liquide TN entre l'un des polariseurs 21 ou 31 et le cristal liquide 26 des composants photo-transparents présentés en figures 5 à 11 permet d'inverser la dérivée de la fonction transparence/intensité lumineuse ponctuelle.

Ceci permet au dispositif de fonctionner en accentuant ou en réduisant les contrastes selon la commande du circuit 7 ou selon la commande de l'utilisateur faite par l'intermédiaire d'un bouton poussoir ou d'un potentiomètre, par exemple.

Dans les figures 12a, 12b, 12c et 12d sont représentés quatre circuits de commande 7.

Le circuit présenté en regard de la figure 12a possède trois transistors 36, un connecteur d'entrée 37 et un connecteur de sortie 38. Le connecteur d'entrée 37 peut être relié au signal de début d'image d'une caméra électronique, ou à un déclencheur d'appareil photographique, par exemple. Le connecteur de sortie 38 est relié aux électrodes du composant photo-transparent 6.

Ce circuit 7 réalise des fonctions croissantes en "rampes" après chaque signal de synchronisation. Il permet donc de commander une sensibilité variable et progressive du composant 6.

Les points de ce composant réagissent donc successivement en fonction de l'intensité lumineuse incidente, dès que ladite intensité dépasse la sensibilité instantanée du composant 6.

Ce circuit est particulièrement adapté aux composants 6 qui ne peuvent présentés que deux états, l'un transparent et l'autre opaque. Les composants 6 à céramique PLZT ou à cristaux liquides ferroélectriques sont des exemples pour lesquels le circuit présenté en figure 12a présente un intérêt.

La transparence de chaque point du composant 6 est réalisée pendant une durée variable en fonction de l'intensité lumineuse incidente.

Dans la figure 12b, on retrouve le connecteur de sortie 38, et un circuit électronique comportant deux transistors 36. Ce circuit, de type connu, qui se connecte en parallèle avec le composant 6 est un régulateur d'intensité électrique.

L'intensité électrique traversant le composant 6 est donc fixée à une valeur prédéterminée qui contrôle une transparence moyenne du composant 6.

Dans la figure 12c est représenté un circuit amplificateur dont l'amplification dépend de la résistance entre les électrodes du composant 6. Ce circuit est donc plus particulièrement adapté aux modes de réalisation du composant 6 comportant un matériau photo-conducteur.

Ce circuit 7 présente donc un connecteur d'entrée 37 et un connecteur de sortie 38, ainsi qu'un amplificateur opérationel 39 selon un schéma électronique très classique.

La tension de commande du composant 6 est donc ici fonction de la résistance de ce composant, cette résistance étant elle-même fonction d'une intensité lumineuse moyenne de l'image initiale 1.

Enfin, dans la figure 12d est représenté un circuit électronique 7 adapté aux modes de réalisation du dispositif selon l'invention comportant un capteur d'image. Le connecteur d'entrée 37 est relié au signal émis par ledit capteur d'image. Le connecteur de sortie 38 est relié au électrodes du composant 6. La tension entre ces électrodes est alors fonction du signal émis par le capteur d'image. On reconnait dans le circuit 7 présenté dans la figure 12d deux étages comportant des amplificateurs opérationnels 39, le premier étant un étage de détection de valeur maximale du signal émis par le capteur d'image, le second réalisant la multiplication du signal issu du premier étage par un signal constant. La valeur crête d'un signal vidéo correspondant généralement à l'intensité lumineuse maximale reçue par ce capteur, le circuit ici présenté réalise une contre-réaction aux éblouissements.

Les circuits présentés ici ne sont donnés qu'à titre indicatif pour présenter la diversité des moyens de contrôle qui peuvent être employés.

De même, les raccordements du connecteur de sortie 38 au composant 6 peuvent être remplacer par des raccordement aux autres moyens de contrôle présentés ci-dessus, comportant une source lumineuse, un diaphragme, une électrode chauffante, ou générant des signaux alternatifs de commande du composant 6, par exemple.

Dans la figure 13 est représenté le troisième mode de réalisation du dispositif selon l'invention, tel que présenté en regard de la figure 4, associé à une caméra électronique.

Dans la figure 13 sont représentés, sur un axe optique A, un objectif 13 formant une image initiale virtuelle non représentée, composée d'un point de forte intensité lumineuse traversé par des rayons de forte intensité 3 et un point de faible intensité lumineuse traversé par des rayons de faible intensité 5, un composant photo-transparent 6 dont la transparence en chaque point dépend de l'intensité lumineuse le traversant, un circuit de commande 7 percevant une intensité lumineuse moyenne de l'image initiale et commandant électroniquement le fonctionnement du composant photo-transparent 6 et ceci uniformément sur toute la surface du composant 6, une image finale réelle 8 composée d'un point de forte intensité lumineuse 9 traversé par des rayons de forte intensité 10 et un point de faible intensité lumineuse 11 traversés par des rayons de faible intensité lumineuse 12, une source lumineuse 15, un moyen de combinaison 16 des rayons provenant de l'objectif 13 et de ceux provenant de la source lumineuse 15 et un capteur d'image électronique 40.

Le circuit de commande 7 est relié électroniquement d'une part au composant photo-transparent 6 et d'autre part à la source lumineuse 15. Il commande successivement le fonctionnement du composant photo-transparent 6 et de la source de lumière 15 dans la durée de prise d'une image par le capteur 40. Entre deux prises d'images, le composant photo-transparent 6 et la source lumineuse 15 sont au repos.

Le composant photo-transparent 6 présente ici une transparence ponctuelle fonction croissante puis décroissante de l'intensité lumineuse incidente. Pour présenter une telle fonction, le composant possède un pouvoir rotatoire de 180 degrés et deux polariseurs d'axes de polarisation perpendiculaires. Son effet photo-électronique possède un temps de réponse très faible inférieur à la durée séparant deux prises d'images par le capteur 40. La source de lumière 15 émet de la lumière pendant une durée inférieure au temps de réponse du cristal liquide 26.

Les rayons de faible intensité lumineuse correspondent donc à des transparences croissantes du composant photo-transparent 7.

Pendant l'émission de la source lumineuse 15, les intensités des rayons transmis au capteur 40, qui sont les produits des transparences ponctuelles du composant 6 par l'intensité des rayons provenant de la source lumineuse 15 et atteignant le composant 6, sont croissantes en fonction des intensités lumineuses de l'image initiale.

Les rayons de faible intensité lumineuse sont alors amplifiés de telle manière qu'ils peuvent être perçus par le capteur d'image 40.

Au contraire, les rayons de forte intensité lumineuse, qui peuvent être captés par le capteur 40, correspondent à la partie décroissante de la courbe transparence/intensité. Leur contrastes sont donc réduits et le dispositif selon l'invention peut ainsi capter une image très contrastée.

Les rayons émis par la source lumineuse 15 n'influencent pas le fonctionnement du composant 6 puisque celui-ci est au repos pendant l'émission de ces rayons. Même dans le cas de l'utilisation de l'effet photo-conducteur, le temps de réponse de ce photo-conducteur étant inférieur à la durée séparant deux prises d'images par le capteur 40, la conduction induite par les rayons issus de la source 15 a disparu au début de la prise d'image suivante.

Une application particulièrement intéressante du dispositif selon l'invention est la réalisation de lunettes de vision. En particulier, on comprend aisément que le mode de réalisation présentés aux figures 4 et 13 s'adapte à la vision nocturne, le capteur présenté en figure 13 devant alors être supprimé et une optique complémentaire permettant de regarder l'image finale 8 devant être ajoutée.

**Revendications**

1) Dispositif de transformation d'une image initiale (1) en une image finale (8) comprenant un moyen optique ou électro-optique (20) de formation d'une image initiale (1), caractérisé en ce qu'il comporte un composant optique (6) transparent point par point possédant en chaque point une transparence variable en fonction de l'intensité lumineuse atteignant ce point, et un circuit de commande (7) commandant le fonctionnement du composant optique (6) uniformément sur toute sa surface, l'image initiale (1) étant formée sur ou à courte distance de ce composant optique (6) et les rayons (3,5) formant l'image initiale (1) traversant ledit composant optique (6), de telle manière que les intensités lumineuses (2,4) des points de l'image initiale (1) soient amplifiées de manière non linéaire conduisant à la formation d'une image finale (8) dont les contrastes entre les intensités lumineuses de deux points (9,11) soient différents de ceux entre les deux points correspondant (2,4) formant l'image initiale (1).

2) Dispositif selon la revendication 1 caractérisé en ce que le moyen optique ou électro-optique (20) est un objectif (13), et en ce que les contrastes de l'image (8) sont réduits par rapport à ceux de l'image initiale (1).

3) Dispositif selon la revendication (1) caractérisé en ce que le moyen optique ou électro-optique (20) est un écran plat (14) associé à une source lumineuse (15), et en ce que les contrastes de l'image finale (8) sont augmentés par rapport à ceux de l'image initiale (1).

4) Dispositif selon la revendication 1 caractérisé en ce que le moyen optique ou électro-optique (20) est un objectif (13) et en ce qu'une source lumineuse (15) éclaire uniformément le composant optique (6), le fonctionnement du composant optique (6) et celui de la source lumineuse (15) étant temporellement alternés, l'effet de photo-transparence photo-induit ne dépendant que des rayons lumineux provenant de l'objectif (13), si bien que les intensités lumineuses ponctuelles de l'image finale (8) sont augmentées par rapport à celles de l'image initiale (1)

5) Dispositif selon la revendication 2 ou la revendication 4 caractérisé en ce qu'il comporte un capteur d'image (40) accolé au composant optique (6) et positionné dans le plan focal de l'objectif (13).

6) Dispositif selon l'une quelconque des revendications 1 à 5 caractérisé en ce que le composant optique (6) comporte une couche uniforme photo-conductrice (24) et une couche d'un composant électro-optique (26) dont l'effet optique varie ponctuellement en fonction de la tension qui lui est appliqué ou de l'intensité du courant électrique qui le traverse.

7) Dispositif selon la revendication 6 caractérisé en ce que les électrodes (23,29) du composant optique (6) sont disposées parallèlement les unes aux autres, du même côté du composant électro-optique (26), et reliés alternativement aux deux bornes du circuit de commande (7).

8) Dispositif selon la revendication 6, caractérisé en ce que les électrodes (23,29) du composant optique (6) sont disposées de part et d'autre du composant électro-optique (26) formant deux réseaux croisés disposés perpendiculairement l'un à l'autre.

9) Dispositif selon l'une quelconque des revendications 1 à 5 caractérisé en ce que le composant optique (6) comporte au moins deux couches uniformes dopées électriquement (32,33,34,35) réalisant à leur jonction une photo-diode et une couche d'un composant électro-optique (26) dont l'effet optique varie ponctuellement en fonction de la tension qui lui est appliquée ou du courant le traversant.

10) Dispositif selon la revendication 9 caractérisé en ce que les électrodes (23,29) du composant optique (6) sont disposées parallèlement les unes aux autres du même côté du composant électro-optique (26), et reliés alternativement aux deux bornes du circuit de commande (7).

11) Dispositif selon la revendication 9 caractérisé en ce que les électrodes (23,29) du composant optique (6) sont disposées de part et d'autre du composant électro-optique (26) et forment deux réseaux croisés disposés perpendiculairement l'un à l'autre.

12) Dispositif selon l'une quelconque des revendications 6 à 11 caractérisé en ce que le composant électro-optique est un cristal liquide.

13) Dispositif selon la revendication 12 caractérisé en ce que le cristal liquide (26) possède un pouvoir rotatoire de 180 degré et est positionné entre deux polariseurs (21,31) croisés, de telle manière que la transparence varie de manière croissante puis décroissante en fonction de l'intensité lumineuse incidente.

14) Dispositif selon l'une quelconque des revendications 1 à 5 caractérisé en ce que le composant optique (6) renferme un matériau photo-électro-optique (42) ou photo-chimico-optique.

15) Application du dispositif selon l'une quelconque des revendications précédentes à la réalisation de lunettes de vision.

Fig 1a

Fig 1b

Fig 1

Fig 2

Fig 3

Fig 4

Fig 5

Fig 6

Fig 7

Fig 8

Fig 9

Fig 10

Fig 11

Fig 12a

Fig 12b

Fig 12c

Fig 12d

Fig 13

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | FR-A-2 610 735 (THOMSON-CSF)<br>* Page 7, ligne 25 - page 11, ligne 17 *<br>--- | 1,6,8,<br>12 | H 04 N 5/235<br>G 03 B 7/28<br>G 02 F 1/135<br>G 02 C 7/10 |
| X | FR-A-2 351 550 (ELLIOTT BROTHERS)<br>* Page 1, ligne 13 - page 4, ligne 29 *<br>--- | 1,6,,12 | |
| X | EP-A-0 141 012 (N.A.S.A.)<br>* Page 2, ligne 13 - page 5, ligne 36 *<br>--- | 1 | |
| X | US-A-4 772 785 (CHENG et al.)<br>* Colonne 1, ligne 14 - colonne 2,<br>ligne 17 *<br>--- | 1 | |
| X | WO-A-8 704 530 (CORNUEJOLS)<br>* Page 2, ligne 7 - page 4, ligne 17;<br>page 9, ligne 19 - page 10, ligne 23 *<br>----- | 1,3 | |

**DOMAINES TECHNIQUES RECHERCHES (Int. Cl.5)**

G 02 F 1/00
H 04 N 5/00
G 03 B 7/00

Le présent rapport a été établi pour toutes les revendications

| Lieu de la recherche | Date d'achèvement de la recherche | Examinateur |
|---|---|---|
| LA HAYE | 03-07-1990 | DIOT P.M.L. |